# EUROPÄISCHE PATENTANMELDUNG

(11) **EP 2 458 611 A1**
(43) Veröffentlichungstag der Anmeldung: **30.05.2012**
(21) Anmeldenummer: 10193015.4
(22) Anmeldetag: 29.11.2010
(51) Int. Cl.: H01H 71/04, H02J 13/00, H01H 9/16

(54) **Schalteinrichtung und externe Steuerbaugruppe**

(71) Anmelder: Eaton Industries GmbH, 53115 Bonn (DE)
(72) Erfinder: Reidt, Georg, 53913, Swisttal (DE)
(74) Vertreter: Leadbetter, Benedict

(57) **Zusammenfassung**

Es wird eine elektrische Schalteinrichtung für einen Verbraucher oder Last und eine externe Steuerbaugruppe, insbesondere Schutzschaltgerät oder Schütz dargestellt, wobei die Schalteinrichtung 8 über eine Ansteuerleitung 14 mit einem Schaltsignal S von der externen Steuerbaugruppe 50 geschaltet wird. Die Schalteinrichtung 8 umfasst in einem Gehäuse angeordnet, folgende Funktionsgruppen: Auslösemechanismus 10, Schaltmechanismus 11, Steuerelektronik 12, eine Datenübermittlungseinrichtung 30 und eine Datenschnittstelle. Es kann weiter wenigstens ein Sensor 41,US, 40, IS zur Erfassung von Betriebsgrößen und eine Verarbeitungseinheit 12" für erfasste Betriebsgrößen vorhanden sein. Die Erfindung besteht darin, dass die Datenübermittlungseinrichtung 30 als Powerline-Kommunikations-Schnittstelle ausgebildet ist. Ein erfindungsgemäßes Verfahren zum Betreiben der elektrischen Schalteinrichtung besteht darin, dass die Schalteinrichtung über eine Ansteuerleitung 14 mit einem Schaltsignal S von der externen Steuerbaugruppe 50 geschaltet wird, wobei die von der Steuerelektronik 12 gelieferten Daten und die über die Datenübermittlungseinrichtung und die Datenschnittstelle anstehenden Daten in einem PLC-Kommunikationsmodul 30 umgesetzt werden und über die Ansteuerleitung 14 an die Steuerbaugruppe 50 übermittelt werden.

## Beschreibung

Die Erfindung betrifft eine elektrische Schalteinrichtung mit Steuerelektronik und eine externe Steuerbaugruppe, insbesondere Schutzschaltgerät oder Schütz oder Motorstarter, wobei die Schalteinrichtung über eine Ansteuerleitung mit einem Schaltsignal von der externen Steuerbaugruppe (fern-)-geschaltet wird.

Bekannt sind elektrische Schutzschaltgeräte, insbesondere als Motorstarter oder Motorschutzschalter, deren Steuerelektronik über einen Kommunikationsbus anschließbar ist (beispielsweise DE 19820667 A1, DE 19924413 A1, DE 10010290 A1).

Nach der DE 10232375 A1 umfasst einen mehrpoligen Schalter ein Kommunikationsmodul, das mit der Verarbeitungseinheit eines Schutzmoduls kommuniziert. Über das Kommunikationsmodul können Betriebsdaten und Zustandsinformationen der Trennkontakte und/oder des Auslösemechanismus geliefert werden.

Der Erfindung liegt die Aufgabe zugrunde, eine Schalteinrichtung mit externer Steuerbaugruppe und ein entsprechendes Verfahren zum Betreiben der Schalteinrichtung anzugeben, bei der eine gesonderte Datenschnittstelle nicht mehr vorhanden ist.

Die Lösung der Aufgabe ist im Hauptanspruch dargestellt. Weiterführende Ausführungsformen sind in Unteransprüchen und in Verfahrensansprüchen formuliert.

Es handelt sich um eine elektrische Schalteinrichtung, die in einem Gehäuse angeordnet, folgende Funktionsgruppen umfasst: Auslösemechanismus, Schaltmechanismus, Steuerelektronik mit Verarbeitungseinheit für erfasste Betriebsgrößen, eine Datenübermittlungseinrichtung und eine Datenschnittstelle für von der Steuerelektronik gelieferte Daten. Vorzugsweise kann weiter wenigstens ein Sensor zur Erfassung von Betriebsgrößen vorhanden sein.

Der wesentliche Kern der Erfindung liegt darin, dass die Datenübermittlungseinrichtung als Kommunikationsmodul einer Powerline-Kommunikations-Technologie ausgebildet ist. Die Kommunikation ist mindestens unidirektional (einseitige Kommunikationsrichtung), vorzugsweise bidirektional gestaltet.

Powerfine-Kommunikation, weitgehend auch mit PLC-Technologie abgekürzt, ist der Oberbegriff für die Übertragung von Daten über Niederspannungsstromleitungen. Die Technologie ist auch unter dem Begriff Digital Powerline (DPL) bekannt, und beispielsweise unter CENELEC im einzelnen genormt.

Die PLC-Technologie (mit Powerline-Modem und Powerline-Interface) ermöglicht das Übertragen von Daten über Energieleitungen (z.B. 24 VDC oder 230 VAC), die zur Versorgung von Verbrauchern dienen. Datenpakete werden mit speziellen Filter- und Kopplerschaltungen und Modulationsverfahren übertragen. Das PLC-Kommunikationsmodul ist die Ein-/ Ausgabeschnittstelle der Verbindung. Die Daten werden beispielsweise über ein Hochfrequenzträgersignal (z.B. 100 kHz) übermittelt. PLC-Module können prinzipiell bidirektional senden.

Die Erfindung weist weitere bevorzugte Ausführungsformen und Merkmale auf, von denen mindestens einige einzeln oder gemeinsam verwirklicht sein können. Diese sind im folgenden kurz angesprochen.

Ein Merkmal der Erfindung betrifft eine Schalteinrichtung als Motorstarter oder als Schutzschalter für einen Elektromotor zur Schutzbeschaltung gegen thermische Überlast oder Kurzschluss. Für eine solch implementierte Motorschutzfunktion, beispielsweise als Schutz gegen erhöhte Erwärmung des Motors, kann die Größe des Motornennstroms oder es können Auslösekennlinien in der Steuerelektronik eingestellt und implementiert sein, die einer gewünschten Schutz-Klasse einer Schutzvorschrift, z.B. nach IEC/EN 60947 entsprechen.

Die Steuerelektronik steuert in erster Linie den Auslösemechanismus (Trennkontakte). Gemäß Erfindung ist sie auch zur Erfassung und Verarbeitung der Betriebsgrößen und von Zustandsinformationen ausgebildet. Die weiteren Informationen und Daten können dann bereitgestellt und über das PLC- Kommunikationsmodul übertragen werden. Die Steuerelektronik kann auch zur Erfassung von Parametern des Laststroms und/oder der an der Last liegenden Leistung ausgebildet sein und diese zur Darstellung der Parameter über die PLC-Schnittstelle zur Steuerungsbaugruppe übermitteln. Die schalttechnischen Daten können auch Aussagen zur Lebensdauer (Zahl der Schaltspiele der Trennkontakte) umfassen. Über die Steuerbaugruppe und einer weiteren Elektronik können die übermittelten Daten auch zur Diagnose, zur Anzeige (grafische Darstellung) und/oder zu Warnmeldungen eingesetzt werden.

Der wenigstens eine Sensor ist zur Erfassung von Betriebsgrößen ausgebildet, also als Stromsensor, als Spannungssensor und/oder als Temperatursensor. Vorzugsweise werden Betriebsspannung und/oder Betriebsstrom der zu schützenden Last erfasst, wie momentan fließender Laststrom, Feststellen des Leistungsfaktors cos(phi), Ermittlung verbrauchter Energie und/oder vergleichbare Daten. Ein Temperatursensor kann bei Einsatz einer Schalteinrichtung in einer Umgebung mit erhöhter Temperatur dazu dienen, einen angeschlossenen Motor oder die Schalteinrichtung selbst thermisch zu überwachen.

In der Steuerelektronik kann ein permanenter Speicher für Betriebsgrößen, Leistungsdaten, schalttechnische Daten und/oder für Messdaten vorhanden sein. Die erfindungsgemäße Anordnung verliert ihre Funktion, wenn die Schalteinrichtung abgeschaltet ist, hierbei wird die Ansteuerleitung spannungslos und damit ist eine Datenkommunikation über PLC-Technologie nicht (mehr) möglich. Nach Wiedereinschalten der Schalteinrichtung sind die gespeicherten Daten abfragbar.

Die Schalteinrichtung weist eingangs- und ausgangsseitige Anschlussklemmen für die Ansteuerleitung auf. Über die PLC-Schnittstelle ist auch das Parametrieren der Steuerelektronik (Verarbeitungseinheit) durch die Steuerungsbaugruppe möglich.

Die Steuerelektronik kann zur Ansteuerung des Auslösemechanismus ausgebildet sein. Das ist von Vorteil, wenn beispielsweise von der Verarbeitungseinheit ein Überschreiten einer Maximaltemperatur der Last gemeldet wird.

Die Steuerelektronik und das PLC-Kommunikationsmodul erhalten ihre Versorgungsspannung über die Ansteuerleitung und ein Netzteil. Die Ansteuerleitung kann über Wechselspannung oder über Gleichspannung betrieben werden. Die PLC-Schnittstelle ist entsprechend der verwendeten Spannung mit einer geeigneten Filterschaltung ausgestattet und im Falle einer Wechselstromversorgung galvanisch isoliert ausgebildet. Im Falle des Wechselspannungsbetriebs muss das PLC-Kommunikationsmodul galvanisch getrennt von der Ansteuerleitung ausgebildet sein.

Die Steuerbaugruppe umfasst eine Netzversorgung (Schwachstrom oder Niederspannungseinspeisung) und mindestens eine Datenschnittstelle zu einem Kommunikationsbus oder zu einer Steuerzentral, hierzu sind auch Anschlussklemmen für Busleitungen und Steuerleitungen vorhanden. Eine Datenschnittstelle in der Steuerbaugruppe kann als Feldbus-Gateway, beispielsweise mit Profibus, Modbus, o.ä. ausgebildet sein. Die Steuerungsbaugruppe wird typischerweise an ein SPS-System (SPS = Speicherprogrammierbare Steuerung) angereiht oder kann ein Bestandteil einer Speicherprogrammierbare Steuerung sein.

Die Steuerbaugruppe kann weiter mehrere Schaltausgänge (als Relais oder als HalbleiterSchalter) umfassen, mit denen mehrere Schalteinrichtungen zum EIN- und AUS-Schalten einer Last aktivierbar sind.

Ein erfindungsgemäßes Verfahren zum Betreiben einer elektrischen Schalteinrichtung und einer externen Steuerbaugruppe, insbesondere Schutzschaltgerät oder Schütz, besteht darin, dass die Schalteinrichtung über eine Ansteuerleitung mit einem Schaltsignal von der externen Steuerbaugruppe geschaltet wird, wobei die von der Steuerelektronik gelieferten Daten und die über die Datenübermittlungseinrichtung und die Datenschnittstelle anstehenden Daten in einem PLC-Kommunikationsmodul umgesetzt werden und über die Ansteuerleitung an die Steuerbaugruppe übermittelt werden. Eine Datenübermittlung kann vorzugsweise auch von der Steuerbaugruppe über ein PLC-Kommunikationsmodul in Richtung zur Schalteinrichtung vorgenommen werden.

Die Erfindung wird in Ausführungsbeispielen in Figuren dargestellt, wobei diese im Einzelnen zeigen:
Fig. 1: Blockschaltbild von Schalteinrichtung und Steuerbaugruppe,
Fig. 2: die Steuerbaugruppe und
Fig. 3: die Schalteinrichtung in detaillierter Darstellung.

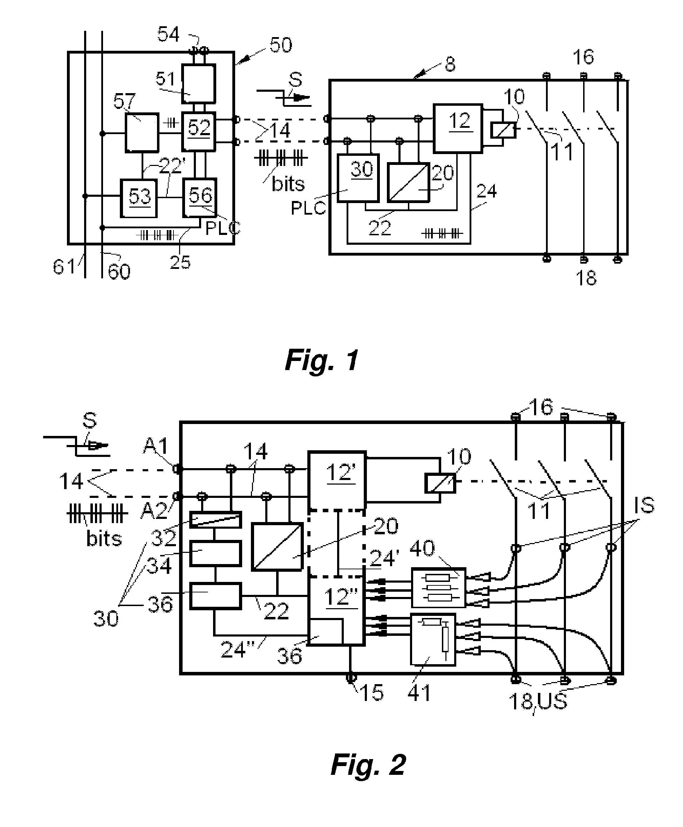

Die Figur 1 zeigt eine Blockschaltbild der elektrischen Schalteinrichtung 8 für einen Verbraucher 18 und die externe Steuerbaugruppe 50. Die (vorzugsweise) als Schütz ausgebildete Schalteinrichtung 8 wird über eine Ansteuerleitung 14 mit einem Schaltsignal S von der externen Steuerbaugruppe 50 geschaltet. Im nur angedeuteten Gehäuse sind folgende Funktionsgruppen angeordnet: Auslösemechanismus 10, Schaltmechanismus mit Trennkontakten 11, eine Steuerelektronik 12. Die in der elektrischen Schalteinrichtung vorhandene Datenübermittlungseinrichtung 30 (und die Datenschnittstelle) ist für von der Verarbeitungseinheit 12 gelieferte Daten 24 als PLC-Kommunikationsmodul 30 ausgebildet. Mit den Bezugszeichen 16, 18 sind Lastanschlussklemmen zur Durchleitung eines Laststroms gekennzeichnet. Datenleitungen sind mit den Bezugszeichen 24 (24', 24" Fig. 2) gekennzeichnet. Die PLC-Kommunikation läuft über die Ansteuerleitung 14 unidirektional oder bidirektional und ist mit 'bits' bezeichnet.

Die Schalteinrichtung 8 kann einen Eingang 15 und ein Messdatenmodul für an dem Verbraucher 18 anstehende Messdaten umfassen. Beispielsweise können thermische Daten in einem als Motor ausgebildeten Verbraucher erfasst und ausgewertet werden. Das Messdatenmodul ist nicht gesondert in den Figuren dargestellt. Ebenso ist nicht zeichnerisch dargestellt, dass in der Steuerelektronik 12 ein permanenter Speicher für Betriebsgrößen, Leistungsdaten, schalttechnische Daten und/oder für Messdaten vorhanden ist. Der permanente Speicher kann ein RAM, FRAM oder EEPROM sein, er kann batteriegepuffert oder ähnlich ausgebildet sein. Durch die permanente Speicherung sind die gespeicherten Daten bei aktivem Betrieb der Ansteuerleitung jederzeit abrufbar.

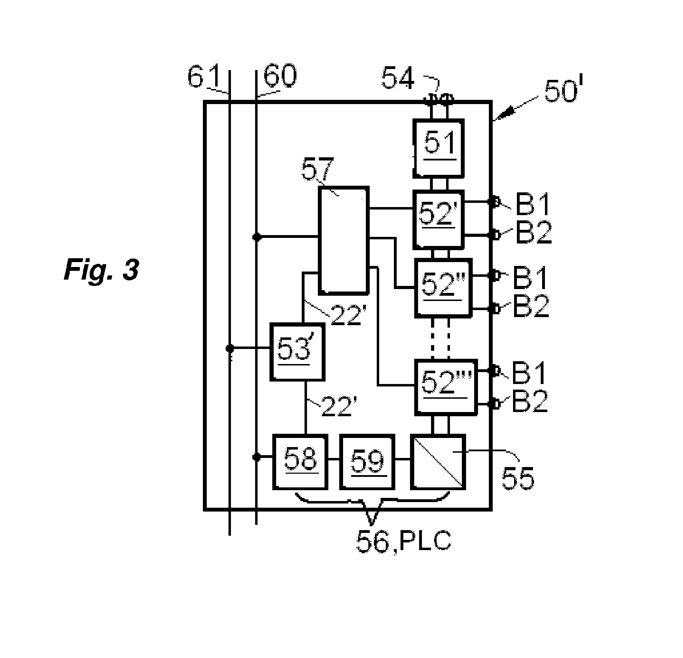

Die Steuerbaugruppe 50 ist sowohl in Fig. 1 als auch in der Fig. 3 dargestellt. Die Steuerbaugruppe (50, 50') umfasst, neben einem Schaltausgang 52 mit Anschlussklemmen B1, B2 für die Ansteuerleitung 14, eine Netzversorgung 54 (Netzspannung oder Kleinspannung z.B. 24 VDC); eine Ansteuerungselektronik 57, ein PLC-Kommunikationsmodul 56 und eine Datenschnittstelle (58) zu einem Kommunikationsbus 60 oder zu einer externen Zentraleinheit (HOST). Der Kommunikationsbus 60 kann als Rückwandbus oder als externer Feldbus ausgebildet sein. Weiter sind ein Netzteil 53 (53' in Fig. 3) und ein Spannungsversorgung 61 (siehe noch Fig. 3) vorhanden.

Die Fig. 2 zeigt detaillierte eine elektrische Schalteinrichtung mit Betätigungsspannung über die Ansteuerleitung 14 als Niederspannungswechselstrom (z.B. 230 VAC). Die Steuerelektronik 12 gemäß Fig. 1 ist hier als in zwei Teilen mit den Bezugszeichen 12' und 12" dargestellt, wobei der Kern dieser Teile je ein Mikrokontroller ist. Gemäß Erfindung kann die Verarbeitungseinheit 12" als Einzelbaustein oder integriert in der Steuerelektronik ausgebildet sein. In letzterem Fall würde ein einziger Mikrokontroller das Herz der Steuerelektronik bilden. Ebenso kann auch der PLC-Kontroller 36 als Teil des PLC-Kommunikationsmoduls 30 ausgebildet sein, oder er kann in der Verarbeitungseinheit 12" integriert sein.

Steuerelektronik 12, bzw. Verarbeitungseinheit 12" und das PLC-Kommunikationsmodul 30 erhalten eine Versorgungsspannung 22 über ein an der Ansteuerleitung 14 angeschaltetes Netzteil 20. Das PLC-Kommunikationsmodul ist in seinen Teilen dargestellt: Trafo 32 (galvanische Trennung); Hochpass-Filter 34, PLC-Kontroller 36. Weiterhin ist in Fig. 2 dargestellt: ein erster Sensor (41, US) zur Erfassung der Betriebsgröße Lastspannung U und ein zweiter Sensor (40, IS) zur Erfassung der Betriebsgröße Laststrom. Der Spannungssensor umfasst einen Abgriff US (oder einen Trafo als Spannungswandler) und eine Signalaufbereitung 41. Der Stromsensor (mit Strom/Spannungswandlung 40) kann beispielsweise aus einem Ringkerntrafo (IS) oder aus einer Rogowski-Spule bestehen.

Die Verarbeitungseinheit 12" dient vornehmlich der Verarbeitung der von den Sensoren erfassten Betriebsgrößen Lastspannung und Laststrom der zu betreibenden und/oder schützenden Last.

Weiterhin kann eingerichtet sein, dass die Verarbeitungseinheit 12" Statusdaten aus der Steuerelektronikeinheit 12' abrufen kann (Leitung 24').

Die Fig. 3 zeigt eine besondere Ausführungsform als Steuerbaugruppe 50' mit Ansteuerelektronik 57 und ein PLC-Kommunikationsmodul 56, und mehrere Schaltausgänge 52', 52" und 52"' mit den Klemmen B1/B2 zu Ansteuerleitungen 14. Beim Einsatz der erfindungsgemäßen Anordnung gemäß Fig. 3 bei einem Kunden bildet die Steuerbaugruppe 50' eine Einheit, an die jeweils nach Bedarf ein oder mehrere Schalteinrichtungen (Schütze) 8 anschließbar sind. Die Schaltausgänge bewirken, dass jeweilige EIN-/AUS-Schalten der zugeschalteten Schalteinrichtungen und ermöglichen die parallele Anbindung der Schalteinrichtungen an das einzige PLC-Kommunikationsmodul 56 der Steuerbaugruppe 50' und die Weitervermittlung der Daten an einen Bus 60. In Fig. 3 ist das PLC-Kommunikationsmodul 56 detailliert (entsprechend wie in Fig. 2) mit den Modulen Trafo 55, Hochpassfilter 59 und Datenschnittstelle 58 dargestellt.

Die Steuerungselektronik 57 als auch die PLC-Schnittstelle 58 wird über ein Netzteil 53' versorgt, welches über eine Spannungsversorgung 61 gespeist wird. Die Spannungsversorgung 61 könnte beispielsweise parallel zu einem Rückwandbus eines SPS-Systems geführt sein. Bei einer Gatewaylösung kann die Einspeisung über gesonderte Anschlussklemmen realisiert sein. Letztere ist aber in der Fig. 3 nicht näher dargestellt.

In der Steuerungsbaugruppe 50, 50' werden die Schaltausgänge 52, 52', 52", 52"' über einen Sperrfilter 51 mit der Spannungseinspeisung 54 verbunden. Der Sperrfilter ist so ausgelegt, dass die auf der Ansteuerleitung aufmodulierten PLC-Kommunikationssignale nicht in das einspeisende Versorgungsnetz, welches an die Spannungseinspeisung 54 angeschlossen wird, verschleppt werden.

### Bezugszeichen

- 8: Schalteinrichtung (Schutzschalter, Schütz)
- 10: Auslösemechanismus
- 11: Schaltmechanismus mit Trennkontakten
- 12 12': Steuerelektronik
- 12": Verarbeitungseinheit
- 14: Ansteuerleitung
- A1, A2: Anschlussklemmen Schalteinrichtung
- 15: Messdateneingang
- 16: Einspeisung
- 18: Last, Verbraucher
- 20: Netzteil
- 22 22': Versorgungsspannung
- 24 24':
- 24" 25: Datenleitungen
- 30: PLC-Kommunikationsmodul in der Schalteinrichtung
- 32: Trafo (galv. Trennung)
- 34: Hochpass-Filter
- 36: PLC-Kontroller
- S: Schaltsignal
- bits: digitale Daten
- 40, IS: Strommessung mit Stromsensor
- 41, US: Spannungsabgriff mit Spannungssensor
- 50 50': Steuerungsbaugruppe, Ansteuermodul
- 51: Sperrfilter
- 52, 52',:
- 52", 52"': Schaltausgang
- 53, 53': interne Spannungsversorgung (Netzteil)
- 54: externe Spannungseinspeisung (Netzspannung)
- 55: Trafo (galv. Trennung)
- 56: PLC-Kommunikationsmodul in Steuerungsbaugruppe
- 57: Ansteuerelektronik
- 58: Datenschnittstelle
- 59: Hochpassfilter
- 60: Bus, Rückwandbus
- 61: Spannungsversorgung (Rückwandbus)
- B1, B2: Anschlussklemmen zum Schutzschalter

## Patentansprüche

1. Elektrische Schalteinrichtung (8) für einen Verbraucher (18) und externe Steuerbaugruppe (50), insbesondere Schutzschaltgerät oder Schütz, wobei die Schalteinrichtung (8) über eine Ansteuerleitung (14) mit einem Schaltsignal (S) von der externen Steuerbaugruppe (50, 52) geschaltet wird,
umfassend in einem Gehäuse der Schalteinrichtung (8) angeordnet, folgende Funktionsgruppen
- Auslöse- (10) und Schaltmechanismus (11),
- Steuerelektronik (12), wobei die Steuerelektronik (12) auch zur Erfassung von schalttechnischen Daten eingerichtet ist,
- Datenübermittlungseinrichtung (30) und Datenschnittstelle für von der Steuerelektronik (12) erfasste und gelieferte Daten (24),
und wobei im Gehäuse der Steuerbaugruppe (50) mindestens ein Schaltausgang (52), mindestens eine Ansteuerelektronik (57) und mindestens eine Datenschnittstelle (56) vorhanden ist,
**dadurch gekennzeichnet, dass** die Datenübermittlungseinrichtung in der Schalteinrichtung (8) als Datensendemodul (30) und die Datenübermittlungseinrichtung in der Steuerbaugruppe (50) als Datenempfangsmodul (56) jeweils einer Powerline-Kommunikations-Technologie ausgebildet sind.

2. Schalteinrichtung nach Anspruch 1, **dadurch gekennzeichnet, dass** sowohl die Datenübermittlungseinrichtung in der Schalteinrichtung (8) als auch die Datenübermittlungseinrichtung in der Steuerbaugruppe (50) als Powerline-Kommunikationsmodul (30, 56) ausgebildet sind.

3. Schalteinrichtung nach Anspruch 1 oder 2, **dadurch gekennzeichnet, dass** in der Schalteinrichtung (8) wenigstens ein Sensor (40, IS, 41, US) zur Erfassung von Betriebsgrößen und eine Verarbeitungseinheit (12") für die Betriebsgrößen vorhanden ist.

4. Schalteinrichtung nach Anspruch 3, **dadurch gekennzeichnet, dass** der wenigstens eine Sensor als Stromsensor (40, IS) oder als Spannungssensor (41, US) oder als Temperatursensor ausgebildet ist.

5. Schalteinrichtung nach Anspruch 3 oder 4, **dadurch gekennzeichnet, dass** in der Verarbeitungseinheit (12") ein permanenter Speicher für Betriebsgrößen und/oder Messdaten vorhanden ist.

6. Schalteinrichtung nach einem der Ansprüche 3 bis 5, **dadurch gekennzeichnet, dass** die Verarbeitungseinheit (12, 12', 12") zur Ansteuerung des Auslösemechanismus (10) ausgebildet ist.

7. Schalteinrichtung nach einem der Ansprüche 3 bis 6, **dadurch gekennzeichnet, dass** die Verarbeitungseinheit (12") in der Steuerelektronik (12) integriert ist.

8. Schalteinrichtung nach einem der vorhergehenden Ansprüche, **dadurch gekennzeichnet, dass** die Schalteinrichtung (8) einen Eingang (15) und ein Messdatenmodul für an dem Verbraucher (18) anstehende Messdaten umfasst.

9. Schalteinrichtung nach einem der vorhergehenden Ansprüche, **dadurch gekennzeichnet, dass** die Ansteuerleitung (14) über Gleichspannung betrieben wird.

10. Schalteinrichtung nach einem der Ansprüche 1 bis 8, **dadurch gekennzeichnet, dass** die Ansteuerleitung (14) über Wechselspannung betrieben wird.

11. Schalteinrichtung nach einem der vorhergehenden Ansprüche, **dadurch gekennzeichnet, dass** die Schalteinrichtung (8) als Motorstarter oder als Schutzschalter für einen Elektromotor (18) ausgebildet ist.

12. Schalteinrichtung nach einem der vorhergehenden Ansprüche, **dadurch gekennzeichnet, dass** die Steuerbaugruppe (50) eine Ansteuerelektronik (57), eine Netzversorgung (61) und mindestens eine Datenschnittstelle (58) zu einem Kommunikationsbus (60) oder zu einer externen Zentraleinheit umfasst.

13. Schalteinrichtung nach Anspruch 12, **dadurch gekennzeichnet, dass** in der Steuerbaugruppe (50) mehrere Schaltausgänge (52', 52", 52"') ausgebildet sind, über die je eine Schalteinrichtung (8) geschaltet werden kann.

14. Schalteinrichtung nach einem der vorhergehenden Ansprüche, **dadurch gekennzeichnet, dass** den mehreren Schaltausgängen (52', 52", 52"') zugehörige Anschlussklemmen (B1, B2) für Ansteuerleitungen (14) zugeordnet sind.

15. Schalteinrichtung nach einem der vorhergehenden Ansprüche, **dadurch gekennzeichnet, dass** die Steuerbaugruppe (50) als Speicherprogrammierbare Steuerung oder als Bestanteil einer Speicherprogrammierbare Steuerung ausgebildet ist.

16. Verfahren zum Betreiben einer elektrischen Schalteinrichtung (8) und einer externen Steuerbaugruppe (50), insbesondere Schutzschaltgerät oder Schütz, wobei die Schalteinrichtung (8) über eine Ansteuerleitung (14) mit einem Schaltsignal (S) von der externen Steuerbaugruppe (50) geschaltet wird, nach einem der Ansprüche 1 bis 15, **dadurch gekennzeichnet, dass** mindestens von der Steuerelektronik (12) gelieferte und über die Datenübermittlungseinrichtung (30) und die Datenschnittstelle anstehende Daten (24) über ein PLC-Kommunikationsmodul (30) umgesetzt werden und über die Ansteuerleitung (14) an die Steuerbaugruppe (50) übermittelt werden.

17. Verfahren zum Betreiben einer elektrischen Schalteinrichtung (8) nach Anspruch 16, **dadurch gekennzeichnet, dass** von der Steuerbaugruppe (50) gelieferte Daten (25) über ein PLC-Kommunikationsmodul (56) umgesetzt werden und über die Ansteuerleitung (14) an eine Schalteinrichtung (8) übermittelt werden.
